Europäisches Patentamt

European Patent Office

Office européen des brevets

(19)

(11) Publication number: **0 011 862**
**A1**

(12) **EUROPEAN PATENT APPLICATION**

(21) Application number: **79104760.8**

(22) Date of filing: **29.11.79**

(51) Int. Cl.³: **G 01 K 13/08**
**G 01 K 7/38**

(30) Priority: **04.12.78 US 965881**

(43) Date of publication of application:
**11.06.80 Bulletin 80/12**

(84) Designated Contracting States:
**DE FR GB IT**

(71) Applicant: **GENERAL ELECTRIC COMPANY**
**1, River Road**
**Schenectady, New York 12305(US)**

(72) Inventor: **Popelish, John Anthony**
**Box 160-A Route 1**
**Waynesboro, Virginia(US)**

(74) Representative: **Schüler, Horst, Dr. et al,**
**Kaiserstrasse 41**
**D-6000 Frankfurt Main 1(DE)**

(54) **Non-contact temperature sensor for a fusing roller.**

(57) Apparatus for monitoring the surface temperature of a heated roller comprising a ferromagnetic material with a Curie point in a selected temperature range inserted in the surface of the roller and an AC bridge circuit having said material included by non-contact coupling in one arm of said bridge. The bridge circuit responds to changes in the permeability of said material over a narrow range of temperatures centred at a given temperature to provide a control signal for controlling the temperature of the roller.

FIG.3

EP 0 011 862 A1

- 1 -

NON-CONTACT TEMPERATURE SENSOR FOR A
FUSING ROLLER

This invention relates, in general, to heated fusing roller apparatus for affixing toner material to a substrate to form permanent images thereon and, more particularly, to means for sensing changes in temperature of the heated roller very closely in order to develop control signals for maintaining substantially constant the surface temperature of the heated roller at an area where it contacts the toner material.

In the process of electrostatic or magnetic printing, information is typically recorded in the form of a latent electrostatic or magnetic image on a recording member with subsequent rendering of the latent image visible by the application of electrostatic and/or magnetic marking particles, commonly referred to as toner. The visual image can be either fixed directly upon the recording member or transferred from the member to a sheet of plain paper with subsequent affixing of the image thereto.

In order to permanently affix or fuse a toner material onto a record medium, such as paper, it is necessary to elevate the temperature of the toner material to a point at which the constituents of the toner material coalesce and

-2-

become adhesive. This action causes the toner to be absorbed to some extent into the fibers of the record medium. Pressure is sometimes used to increase the adhesion . Thereafter, as the toner material is cooled, solidification of the toner material occurs causing the toner material to be firmly bonded to the record medium.

In both the electrostatic and magnetic printing arts, the use of thermal energy for fixing toner images onto a support member is old and well-known.

One approach to thermal fusing of toner images onto a record medium has been to pass the record medium with the toner images thereon between a pair of opposed rollers, at least one of which is either externally or internally heated. In this type of arrangement, the toner image contacts the surface of the heated roller member in the nip between rollers to thereby produce heating of the toner image within the nip.

In apparatus utilizing a fuser roll pair as described above, it is important that the heated roller surface be maintained within a suitable range to properly fuse the toner image to its record medium. A conventional manner for accomplishing the foregoing is by the employment of a temperature sensitive resistance device commonly referred to as a thermistor which is placed in physical contact with the heated roll and whose output controls the heat source. An improved arrangement for controlling the heat source is described in a copending U.S. Patent application entitled "Temperature Controller For a Fusing Roller" Serial No. 965,880 filed December 4, 1978 and assigned to a common assignee.

-3-

There is wear to thermistor and fuser roller surface at the contact point. Sliding contact produces frictional temperature rise which is dependent upon condition of sliding interface (amount of non-stick oil applied, contamination of interface with toner material, age and condition of roller surface, etc.). Since this temperature rise is unstable, the set point accuracy is similarly degraded.

Non-contact thermistors suffer from slow response due to long thermal lag between changes in roller surface temperature and corresponding changes in thermistor temperature resulting in large over and undershoots during transient conditions.

Difficult to uncouple changes in ambient temperature from thermistor.

Spacing variations between thermistor and roller surface produce large changes in set point making long term stability difficult and requires recalibration when the roller is replaced.

Thermographic phosphors exhibit instability of UV source degrades the stability of the temperature controller, which is highly undesirable. Since this is an optical system, it is also subject to degradation by stray toner on roller surface or sensor apparatus.

Infrared sensing requires apparatus for chopping the infrared beam to achieve stability. This approach is also affected by ambient temperature and must be compensated. Gain varies according to emissivity of surface being monitored. All these are undesirables.

Other solutions to the problem have been envisioned but they have resulted in more expensive or more complicated devices than was desired.

- 4 -

According to the present invention, the problems of non-contact sensing of the fusing roll temperature in a magnetic printer by the provision of a non-contact curie point sensor and control therefor for maintaining the temperature of the fuser roller substantially constant in an area where it contacts toner material.

More specifically, the present invention utilizes a sensor for measuring the permeability of a curie point material which in one embodiment of the invention is formed integrally with the surface of the fuser roller. Since the permeability of the curie point material can be correlated to the temperature thereof, which in turn is a function of the surface temperature of the roller, the surface temperature can be accurately measured and used for controlling the power input to the fuser roller for the purpose of maintaining the temperature thereof, substantially constant.

Where the curie point material is an integral part of the fuser roller, it may be uniformly dispersed throughout the surface of the fuser roller or may constitute a continuous stripe about the circumference of the roller.

The invention is described in greater detail in the following description of the preferred embodiment of the invention when read in conjunction with the accompanying drawings wherein:

FIGURE 1 is a pictorial view of a toner sealing mechanism for an automatic electrostatic or magnetic printing apparatus utilizing the present invention;

FIGURE 2 illustrates graphically certain features useful in explaining the present invention;

FIGURE 3 is a schematic, partly in section, of a curie point temperature sensing system incorporated in the apparatus of FIGURE 1;

FIGURE 4 is a block diagram of a roller temperature control used in conjunction with the fuser apparatus illustrated in FIGURE 1;

FIGURE 5 is waveforms illustrating certain aspects of the operation of the present invention;

FIGURE 6 illustrates in greater detail certain blocks illustrated in FIGURE 4;

- 5 -

FIGURE 7 illustrates the power waveforms generated in accordance with the present invention; and

FIGURE 8 illustrates the details of the line current sensing system shown in FIGURE 4.

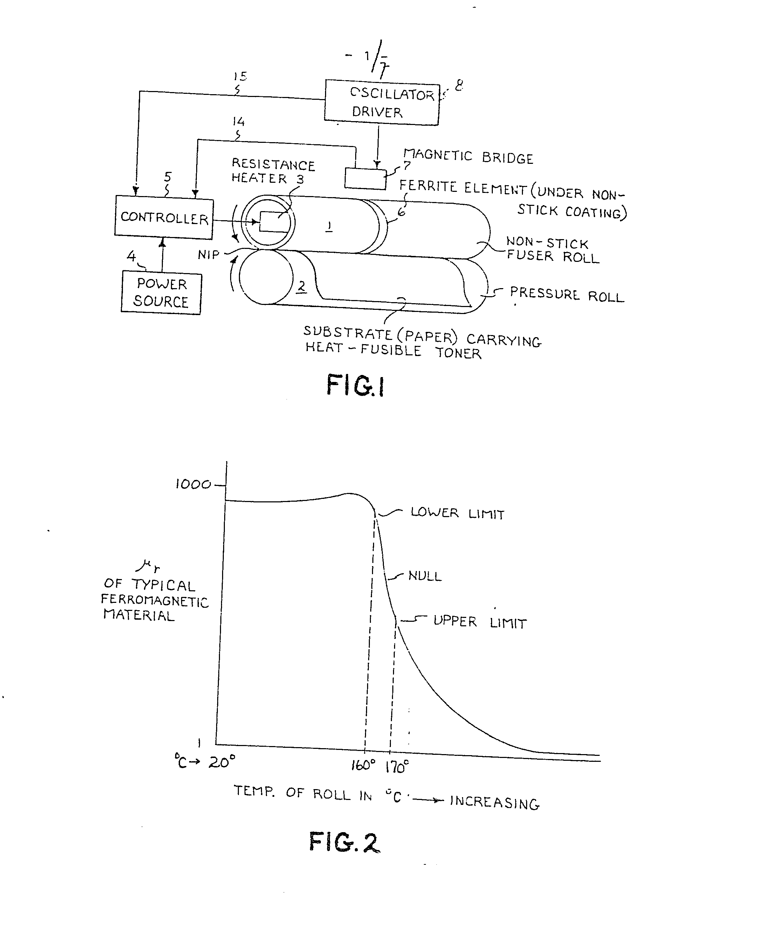

Referring now to FIGURE 1, there is shown an embodiment of the subject invention as applied in a magnetic printing system wherein latent magnetic images are produced on a magnetic medium such as an endless belt of magnetic tape and the latent magnetic images are developed with toner particles which are then transferred to a record medium such as paper. In a printer application the latent images would be descriptive of, for example, alpha and numeric information available from a keyboard or from a communication line. In order to provide a permanent record, it is desirable that the toner developed images transferred to the record medium are permanently fused to that record medium. In this connection shown in FIGURE 1, a pair of rollers 1 and 2 are provided. The two rollers driven by an external source such as a motor, not shown, cooperate with one another to form a nip therebetween through which a substrate such as paper, supporting toner material, is moved. As shown in FIGURE 1, roller 1 is heated by a resistance heater 3 such as a quartz lamp. In the embodiment shown, the heater derives electrical energy from source 4 under the control of a controller 5 which shall be described in greater detail shortly. The surface temperature of roller 1 must be maintained within a very narrow range of the order of $20^{\circ}F$ ($10^{\circ}C$) typically centered at $330^{\circ}F$ ($165^{\circ}C$) to render the toner particles adhesive enough to cling to the paper but not hot enough to melt them to a liquid which would leave a residue clinging to the roller and affecting subsequent paper passing between the rollers. To

-6-

achieve this, therefore, the electrical energy supplied to resistance heater 3 has to be controlled very closely. In order to achieve this degree of control, it is necessary to measure or monitor the temperature of the surface of roller 1 very accurately. In order to monitor the surface temperature of roller 1, applicant inserts a ferromagnetic material as a band 6 completely surrounding the roller.

The composition of the material is selected to have a curie temperature range which corresponds to range of temperature to be maintained.

Referring to FIGURE 2, there is shown a characteristic curve for curie point material operating in the embodiment of the present invention. In FIGURE 2 the magnetic relative permeability which is a dimensionless number is plotted as the ordinate and the temperature of the material is plotted as the abscissa. As shown, the permeability of the material is in the order of 1000 for all temperatures starting from room temperature $70°F$ ($20^0C$) up to some point near a control point where the permeability of the material drops rapidly through a range which includes the temperature control range. As previously mentioned in a particular embodiment, this temperature control range was of the order of $20°F$ ($10^0C$) centered on $330^0F$ ($165^0C$). While the invention has been described in connection with a particular temperature control range in mind, it is obvious that this range can be changed depending on the application desired. FIGURE 2, therefore, illustrates that it is desired to control the temperature of the roller 1 within the narrow temperature range of $20^0F$ ($10^0C$). To achieve this, applicant makes use of an alternating magnetic field bridge having the curie material included in one arm of said bridge.  As shown in FIGURE 1 the magnetic bridge is energized by an oscillator driver 8 which in a particular application provided 3 kilohertz signals to the bridge.  The output of the bridge representative of the permeability of the material as it charges with temperature, and hence the representative of the surface temperature of roller 1, constitutes an input signal to controller 5 for controlling the amount of electrical energy being supplied by source 4 to the heater 3 to maintain the temperature of the surface of the roller within the desired limits.

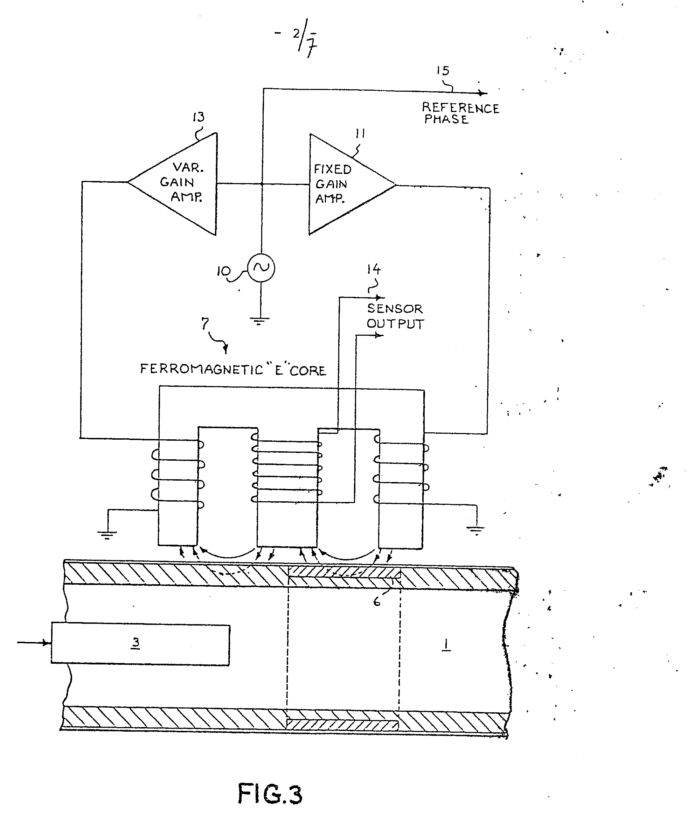

. Referring to FIGURE 3, the nature of the magnetic bridge is shown in greater detail with the roller 1 shown in cross section.  Roller 1 comprises an aluminum cylindrical core coated with a thin, elastomeric, non-stick coating. Bridge 7 in a particular embodiment comprises an E core of ferromagnetic material in which the reference winding energizes one arm of the bridge from signals applied from oscillator 10 via amplifier 11.  The opposite arm of the bridge is energized from the source 10 through a variable gain inverting amplifier 13.  Inverting amplifier 13 is such that the windings 9 and 12 are energized with 3 kilohertz signals which are 180° out of phase.  The gain of the variable gain amplifier 13 is adjusted such that the bridge passes through null at the center of the temperature or permeability control range.  One of the arms of the bridge includes the roller 1 without the ferrite material, that is containing in a particular embodiment only aluminum which exhibits an essentially constant permeability with temperature change

- 8 -

and the other arm includes the portion of the roller 1 carrying the ferrite material 6 embedded in a surface which has a permeability which varies with the temperature of the surface of the roller. The magnetic fields established between the arms of the bridge and the fuser roller are illustrated for one particular instant by the arrows. Since the ferromagnetic material was selected to have its steepest permeability changes in the range of the temperature control range, the bridge produces signals on its output leads 14 which essentially represents the temperature of the roller in the desired control range. The signals developed on the output leads 14 are of 3 kilohertz value and having a phase which varies with respect to the phase of the signals from source 10 available on leads 15 in accordance with the change in permeability of the ferrite material 6 and hence of the temperature of the surface of the roller 1. Controller 5 in FIGURE 1 responds to the relative phase of the signals available on 14 from the bridge and 15 from the reference source 10 to control the electrical energy available from source 4 to the heater 3. The controller to be described shortly performs several complex functions necessary to maintain the surface temperature of the roller within the prescribed temperature range while at the same time minimizing the adverse impact on the power source 4 as a result of the characteristics of the heater element 3. For example, in a particular embodiment the heater element was a quartz lamp which had a maximum power consumption of 2000 watts when provided with power from 120 volts 60 hertz source. With this power, the lamp can raise the surface temperature of the fuser roller 1 to a level which

- 9 -

will soften the toner and cause proper adhesion  of the toner to the record medium or paper.  It should be noted that in a high speed printer application a considerable amount of heat energy has to be supplied to the fuser roller since the heat energy is being carried away rapidly by the paper moving therethrough.  In a particular application where the paper moved at about 16 inches (40cm) per second, a high power quartz lamp was required and this lamp had to be operated near its maximum limit.  When such a high power lamp is initially energized, a current surge  develops, typically six times normal heating current due to the large positive temperature coefficient of resistance of the lamp filament.  In a usual application this amount of surge current would open the fuses or require an oversized power source.  To minimize  this surge current, it is necessary to allow the filament to warm up slowly by applying widely spaced individual cycles of the current thereto.  Also since the typical lamp current is near the source limit, a current detector is included to delete cycles to limit the full power current as it approaches an acceptable maximum. Random switching this large amount of power in an application such as involving a printer connected to normal AC service would produce high frequency noise or DC components in the power line circuit which would exceed acceptable limits.  To overcome these problems, applicant provides an arrangement to control the applied power as integral cycles rather than applying fractional cycles of line frequency current. Power is therefore controlled in full integral cycle increments. This involves switching at the zero crossings of the line voltage.  In order to avoid multiple cycle surges

-10-

during the cycle switching, the arrangement to be described distributes the power cycles evenly in time as the proportion of cycles blocked to cycles passed is varied in accordance with the energy requirements of the fuser roller 1.

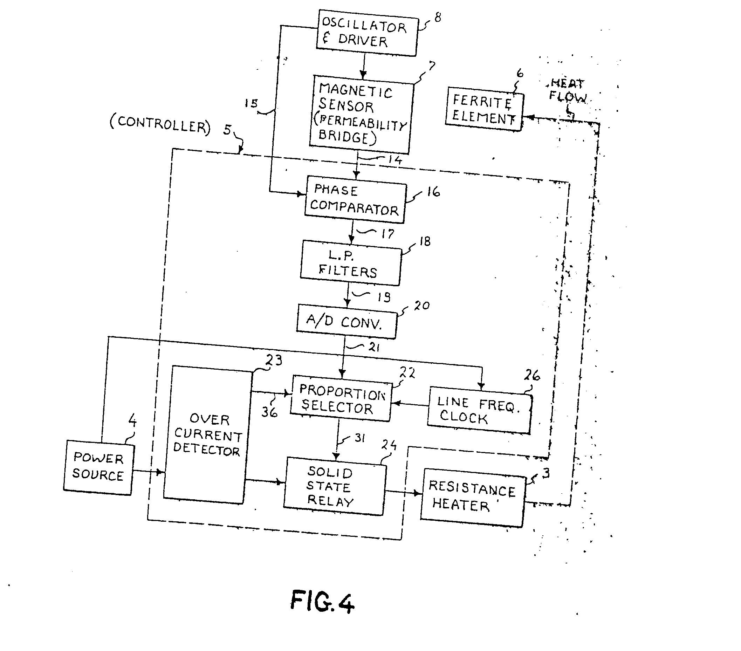

Referring to FIGURE 4, a phase comparator 16 responds to the difference in phase between the signals available on leads 14 and 15 to produce an output signal on lead 17 indicative of the difference in phase between the applied input signals. In a particular embodiment the signals on leads 14 and 15 were 3 kilohertz sine waves. These 3 kilohertz input signals are first prepared by amplification and limiting to produce square waves which are combined in an exclusive OR gate as digital pulses. When these processed pulses are in the same state, the output of comparator 16 is at a logic 0 state and if they are not in the same state, then they produce a second state output signal which is at a logic 1. This circuit is a well known circuit and for further details reference should be made to the RCA solid state handbook entitled "COS/MOS Integrated Circuits" dated 1977 wherein an exclusive OR network operating as a phase comparator is described on page 612. The output of comparator 16 is level 1 or level 0 signals for various amounts of time depending upon the relative phases of the signals available on leads 14 and 15. The purpose of circuit 18 is to convert the variable duty cycle pulse train available on lead 17 to a DC signal by low pass filtering. The DC signal, therefore, on lead 19 is indicative of the temperature of the surface of the fuser roller 1. The function of block 20 is to convert the analog signal on 19 to a digital signal in form of a binary code representing the quantized value of the DC

0011862

11-

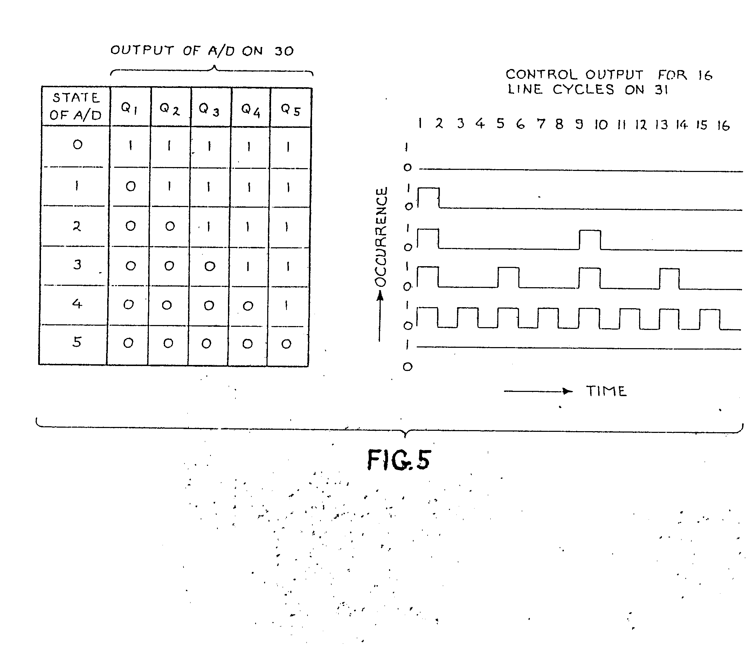

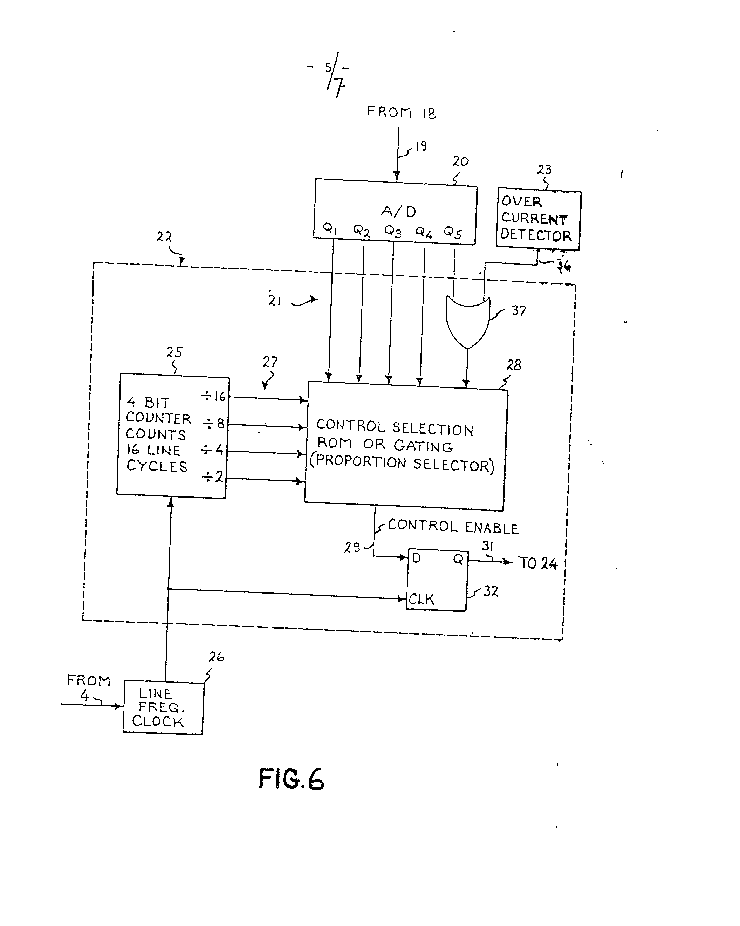

signal available on lead 19. Essentially, circuit 20 senses five discrete DC levels and produces a binary code on lead 21. The A to D converter 20 is a common circuit and will not be described in detail. Reference can be made to Texas Instruments' integrated circuit TL489. Reference can be made now to FIGURE 5 wherein the output of the A to D converter in the form of a five bit code is shown. The converter has six possible output states which span the range of analog signals available on lead 19. The 0 state represents the upper limit of the temperature control range shown in FIGURE 2 and the state 5 represents the lower limit of the temperature control range. The proportion selector 22 functions to delete the desired integral number of power cycles being supplied from the power source 4 to the resistance heater 3 through a current detector 23 and solid state relay 24. As previously mentioned, the function of the selector 22 is to control solid state relay 24 so that it only supplies full or integral cycles of power and that the cycles passed are uniformly distributed in time. Referring to FIGURE 6 the further details of the selector 22 are shown. Essentially, this involves a four bit counter 25 which counts the clock pulses available from source 26 and develops a binary number representative of the sequential counting from 1 to 16 on the leads 27 applied to gates 28. The inputs to leads 27 are representative of the counted line cycles. The particular line cycles selected for passage to heater 3 are communicated to lead 29 in accordance with the states of the signals available on leads 21 from the A to D converter 20. Referring to FIGURE 5 again therefore, it is seen that for the 0 state no integral

or full cycles of the 16 counted cycles is passed to the output lead 31. For the first state only the first cycle is passed. For the second state only the first and ninth cycles are passed and so forth. For the fourth state alternate cycles are passed and for the fifth state the power is passed continuously for all cycles. Flip-flop 32 assures that only one on-off decision can be made per cycle. Flip-flop 32 is a standard D type flip-flop. This decision is conveyed by a signal developed on lead 31 for coupling to solid state relay 24. These variations in duty cycle represents the various amounts of average power to be delivered from source 4 to the resistance heater 3 to maintain the temperature of the roller 1 within the desired range under varying load conditions.

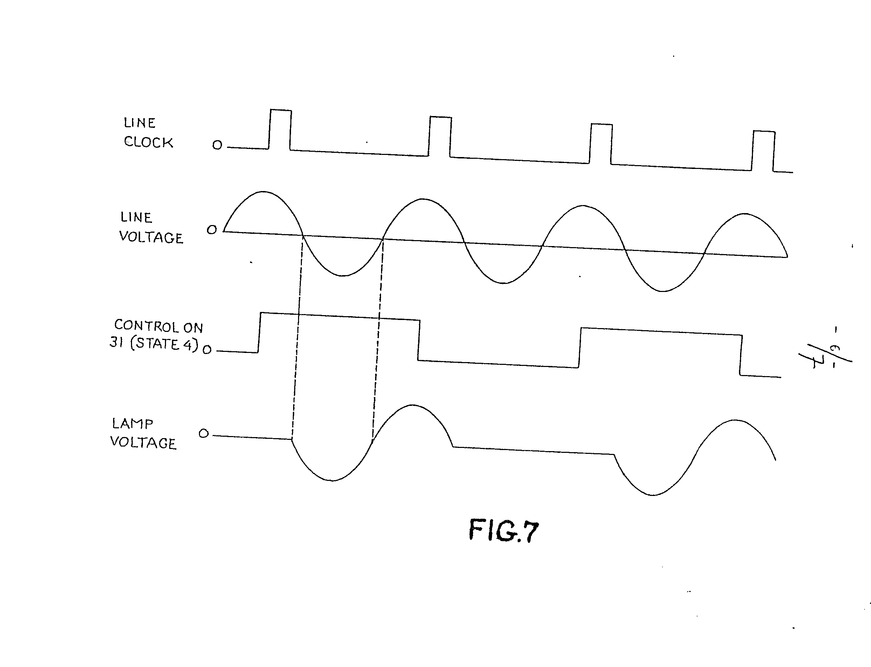

Referring to FIGURE 7, the manner in which the solid state relay 24 responds to the control signal available on lead 31 to gate the desired integral cycles from the power source 4 to the resistance heater 3. This is shown for the condition of A/D state 4 appearing on leads 21. Thus, applicant has described an arrangement for either applying or deleting integral full cycles of power from the source to control the heating of the roller while uniformly distributing the power line cycles so that they produce the previously mentioned advantages.

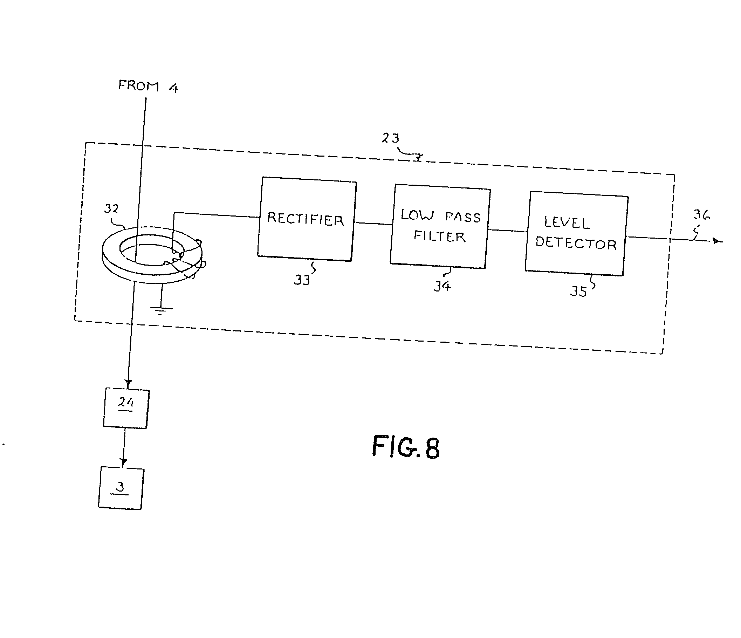

It is desirable to monitor the average line current from source 4 to the resistance heater 3 and to delete cycles to reduce excessive current consumption during full power, or state 5, caused by high line voltage conditions or by an unusually low resistance of the heater 3 which would otherwise cause the heater circuit to draw excessive current and open the fuse. The over current detector 23 operates to cause the proportion selector 22 to

-13-

delete alternate cycles (state 4 of FIGURE 5) to reduce the current consumption during the period these undesirable conditions exist.  In a particular application the current detector 23 comprises a current sensor, ie transformer 32 as shown in FIGURE 8 which responds to the current flowing in the AC line from power source 4 to resistance heater 3. Current produced by sensor 32 is rectified in full wave detector 33 and filtered in low pass filter 34 to produce a signal corresponding to the average magnitude of lamp current.  When this signal at the output of the low pass filter 34 is above a predetermined level indicating excessive current, a level detector 35 responds to produce a signal over lead 36 to the OR gate 37 of the proportion selector 22 to change the state 5 signals appearing on leads 30 to a state 4.  This state 4 represents the application of alternate integral cycles of power from source 4 to the resistance heater.  This condition is continued until the average current from the low pass filter 34 falls below the predetermined level which indicates that the adverse conditions have passed.

The solid state relay 24 is a common device available usually as a triac switching element with an internal triggering circuit to accomplish switching at the zero crossing points of the applied voltage following changes in the control signal.

While the invention has been described with particular reference to the construction shown in the drawings, it is understood that further modification may be made without departing from the true spirit and scope of the invention.

- 1 -

CLAIMS

1. Controlled roll temperature apparatus wherein a plurality of rollers at least one of which is heated, are spaced to form a nip, and a heater is associated with the heated roller and supplied with power from a source through a power controller under the control of means for monitoring the surface temperature of the heated roller characterized in that a temperature controlled roller (1) carries ferro-magnetic material (6) having a predetermined Curie temperature range associated with the surface of said heated roller, a sensor (7) responsive to changes in the properties of said ferro-magnetic material, and a power control circuit (5) responsive to output signals from said sensor connected between said source (4) and said heater (3).

2. Apparatus according to Claim 1 characterized in that said heated roller (1) is of non-magnetic material, said ferro-magnetic material covers a limited portion of the surface of said heated roller, and said sensor (7) spans both a portion of the surface of said heated roller bearing such ferro-magnetic material and a portion of the surface of said heated roller free of said ferro-magnetic material.

3. Apparatus according to either Claim 1 or 2 characterized in that a record medium bearing toner disposed in information patters thereon passes through said nip, said toner is fusible in a predetermined temperature region and said Curie temperature range spans a narrow temperature range in which said toner is caused to adhere to said record medium.

4. Apparatus according to Claim 2 characterized in that said sensor (7) comprises a magnetic bridge, means for energizing said bridge with a reference signal, means for normally balancing said bridge, and means responsive to an imbalance in said bridge due to a change in permeability for producing an imbalance signal, and means for comparing said reference and imbalance signal to provide said first signal.

5. Apparatus according to Claim 4 characterized in that said ferro-magnetic material lies in one of said bridge arms and changes in the permeability of said ferro-magnetic material produce a control signal having a phase with respect to said reference signal phase corresponding to said change in permeability.

6. An arrangement according to Claim 5 characterized in that a phase comparator for comparing to phases of said referenced phase and control signal to provide a digital signal indicating whether the compared phases are of the same or differing phases.

FIG.1

FIG.2

$-\frac{2}{7}$

FIG.3

FIG. 4

OUTPUT OF A/D ON 30

| STATE OF A/D | Q₁ | Q₂ | Q₃ | Q₄ | Q₅ |
|---|---|---|---|---|---|
| 0 | 1 | 1 | 1 | 1 | 1 |
| 1 | 0 | 1 | 1 | 1 | 1 |
| 2 | 0 | 0 | 1 | 1 | 1 |
| 3 | 0 | 0 | 0 | 1 | 1 |
| 4 | 0 | 0 | 0 | 0 | 1 |
| 5 | 0 | 0 | 0 | 0 | 0 |

CONTROL OUTPUT FOR 16
LINE CYCLES ON 31

1 2 3 4 5 6 7 8 9 10 11 12 13 14 15 16

OCCURRENCE

TIME

FIG. 5

0011862

FIG.6

FIG.7

FROM 4

23

32

RECTIFIER

LOW PASS FILTER

LEVEL DETECTOR

36

33

34

35

24

3

FIG. 8

- 7/7 -

0011862

European Patent Office

**EUROPEAN SEARCH REPORT**

0011862

Application number

EP 79 10 4766

| | DOCUMENTS CONSIDERED TO BE RELEVANT | | CLASSIFICATION OF THE APPLICATION (Int Cl ) |
|---|---|---|---|
| Category | Citation of document with indication where appropriate, of relevant passages | Relevant to claim | G 01 K 13/08 7/38 |
| | <u>DE - C - 946 092</u> (O. MULLER) <br><br> * Heading; page 2, lines 32-110; figures 1-4 * <br><br> -- | 1-4 | |
| | <u>US - A - 2 222 425</u> (H.G. WEHE) <br><br> * Heading; page 2, line 21 - page 3, line 9; figures 1-4 * <br><br> -- | 1,2,4, 5 | |
| A | <u>GB - A - 1 194 233</u> (LICENTIA PATENT VERWALTUNGS-GmbH) <br><br> * Heading; page 1, line 67 - page 2, line 103; figures * <br><br> -- | 1 | TECHNICAL FIELDS SEARCHED (Int Cl ) <br><br> G 01 K 13/08 7/35 <br> G 03 G 15/20 |
| A | <u>FR - A - 2 216 570</u> (GEBR. EICKHOFF, MASCHINENFABRIK UND EISENGIESSEREI GmbH) <br><br> * Heading; page 3, line 37 - page 5, line 39; figures 1-6 * <br><br> -- | 1 | |
| A | <u>US - A - 3 849 628</u> (G. ABOWITZ et al.) <br><br> * Heading; column 4, line 45 - column 6, line 1; figures 2-6 * <br><br> ---- | 1 | CATEGORY OF CITED DOCUMENTS <br><br> X: particularly relevant <br> A technological background <br> O: non-written disclosure <br> P intermediate document <br> T theory or principle underlying the invention <br> E: conflicting application <br> D. document cited in the application <br> L: citation for other reasons <br><br> & member of the same patent family. <br> corresponding document |

X The present search report has been drawn up for all claims

| Place of search | Date of completion of the search | Examiner |
|---|---|---|
| The Hague | 13-03-1980 | VISSER |

EPO Form 1503.1 06.78